# EUROPEAN PATENT SPECIFICATION

(11) **EP 1 374 068 B1**
(45) Date of publication and mention of the grant of the patent: **04.06.2008**
(21) Application number: 02721562.3
(22) Date of filing: 19.03.2002
(51) Int. Cl.: G06F 13/00, G06F 11/00, H04J 3/22, H04L 12/26, H04L 29/06

(54) **A method for the tracing and analysis of a multi-protocol communication using a multi-protocol communication analysis application program**
Verfahren zum Verfolgen und Analysieren einer Mehrprotokollkommunikation
Procédé de traçage et d'analyse d'une communication multiprotocole

(30) Priority: 19.03.2001 US 277074 P
(43) Date of publication of application: 02.01.2004
(73) Proprietor: Empirix Inc., Waltham, MA 02451 (US)
(72) Inventor: DOYLE, John, Hollis, NH 03049 (US); LYNCH, Thomas, Hollis, NH 03049 (US); AGRAWAL, Neelesh, Wakefield, MA 01880 (US); DAVIS, Kevin, North Reading, MA 01864 (US)
(74) Representative: Casey, Lindsay Joseph
(86) International application number: PCT/US2002/009044
(87) International publication number: WO 2002/075556

(56) References cited:
- WO-A1-01/15487
- US-A- 6 115 393
- US-A- 6 167 538
- US-B1- 6 269 401
- CACERES R ET AL: "MEASUREMENT AND ANALYSIS OF IP NETWORK USAGE AND BEHAVIOR" IEEE COMMUNICATIONS MAGAZINE, IEEE SERVICE CENTER. PISCATAWAY, N.J, US, vol. 38, no. 5, May 2000 (2000-05), pages 144-151, XP000949795 ISSN: 0163-6804
- MERWE VAN DER J ET AL: "MMDUMP: A TOOL FOR MONITORING INTERNET MULTIMEDIA TRAFFIC" COMPUTER COMMUNICATION REVIEW, ASSOCIATION FOR COMPUTING MACHINERY. NEW YORK, US, vol. 30, no. 5, October 2000 (2000-10), pages 48-59, XP001066104 ISSN: 0146-4833
- DERI L ET AL: "EFFECTIVE TRAFFIC MEASUREMENT USING NTOP" IEEE COMMUNICATIONS MAGAZINE, IEEE SERVICE CENTER. PISCATAWAY, N.J, US, vol. 38, no. 5, May 2000 (2000-05), pages 138-143, XP000949794 ISSN: 0163-6804
- ERHARD W ET AL: "NETWORK TRAFFIC ANALYSIS AND SECURITY MONITORING WITH UNIMON" PROCEEDINGS OF THE IEEE CONFERENCE 2000 ON HIGH PERFORMANCE SWITCHING AND ROUTING. HEIDELBERG, GERMANY, JUNE, 26 - 29, 2000, PROCEEDINGS OF THE IEEE CONFERENCE ON HIGH PERFORMANCE SWITCHING AND ROUTING, NEW YORK, NY : IEEE, US, 26 June 2000 (2000-06-26), pages 439-446, XP001075733 ISBN: 0-7803-5884-8

## Description

### BACKGROUND OF THE INVENTION

A "communication," as used herein, is an exchange of media or other information, either discrete or continuous. Communication "content" may include audio (e.g. voice), video, text, or other data in any combination (e.g. audio only, audio & video, etc.). An electronic communication utilizes one or more "communication protocols," and is exchanged via one or more "communication networks." (A communication protocol is herein referred to as a "protocol" and a communication network is herein referred to as a "network.") A particular communication can be transported across a variety of networks as it propagates from one endpoint to another endpoint. The transport of a particular communication from one endpoint to another endpoint can involve a variety of protocol conversions at various stages of its propagation across networks.

The protocols are selected from a variety of protocols, depending upon the type of communication and the type of network. The protocols are described more fully below.

A failure at any stage of communication transport can cause degraded communication quality, complete loss of communication transport, or degraded communication response times. For example, a failure in the transport of a communication transport corresponding to a telephone call can result in poor call quality or poor response times.

Communication can pass through a variety of network devices in transport from one endpoint to another endpoint. For example, a gateway will be recognized to be a network device that can convert the communication from one particular protocol to another. Thus, the gateway is a network device that receives a first protocol at a gateway input and provides a second protocol at a gateway output.

For another example, a router will be recognized to be a network device that provides routing of the communication from one particular endpoint to another particular endpoint. To facilitate the routing, the router can internally convert from one protocol to another. However, the router has the same input and output protocols. For yet another example, a switch will be recognized to be a network device that also provides routing of the communication from one particular endpoint to another particular endpoint. Like the router, the switch has the same input and output protocols.

As described above, a communication can be transported from one endpoint to another endpoint, through a variety of network devices, and having a variety of protocols. Conventional analysis of the communication transport is provided by specialized protocol monitoring tools that are adapted to monitor only one communication link (e. g. one Ethernet segment) and a specific protocol. Thus, a plurality of protocol monitoring tools must be used to analyze the variety of communication links and the variety of protocols through which a particular communication may be transported as it propagates from one endpoint to another endpoint. With the plurality of conventional protocol monitoring tools, it is difficult to correlate and analyze the propagation of a particular communication through the variety of protocols. Only a sophisticated user can manually correlate and analyze the data generated by the variety of separate protocol monitoring tools.

Caceres R et A1 discloses a method of tracing and analyzing the transport of a communication in a network having a plurality of protocols, the method comprising collecting protocol information corresponding to the plurality of protocols, wherein the collecting is provided by a plurality of network/protocol monitors, processing the protocol information from the plurality of protocols to provide processed protocol information including a) identifying a time corresponding the reception of the protocol information by an analyser, b) identifying a time corresponding to initiation of the communication, and c) correlating the plurality of protocol messages associated with a respective one or more protocol conversions.

It would therefore be desirable to have a system that can automatically provide a user with a simple presentation display that can trace and analyze the variety of protocol conversions as the communication is transported from one endpoint of the network to another.

The present invention provides a method of tracing and analyzing the transport of a communication in a network having a plurality of protocols characterized by displaying as a

ladder diagram including a time scale, a correlation of the one or more protocol messages associated with a respective one or more protocol conversions wherein the displaying includes displaying a message in a first protocol and a corresponding message in a second protocol.

The present invention further provides an apparatus for tracing and analyzing the transport of a communication in a network having a plurality of protocols characterized by a display for displaying as a ladder diagram including a time scale, a correlation of the one or more protocol messages associated with a respective one or more protocol conversions wherein the displaying includes displaying a message in a first protocol and a corresponding message in a second protocol.

With this particular arrangement, the multi-protocol communication analysis system provides a user with a readily understandable presentation display that can trace and analyze a variety of protocol conversions as the communication is transported from one endpoint of the network to another, wherein the transport can include transport across multiple physical networks.

### BRIEF DESCRIPTION OF THE DRAWINGS

The invention will be better understood by reference to the following more detailed description and accompanying drawings in which:
FIG. 1 is a block diagram of a prior art network having three networks/protocols;
FIG. 2 is a block diagram showing a multi-protocol communication analysis system in accordance with the present invention;
FIG. 3 is an exemplary ladder diagram showing communication messages; and
FIG. 4 is a block diagram showing the multi-protocol communication analysis system of FIG. 2 in greater detail.

### DETAILED DESCRIPTION

Before describing the multi-protocol communication analysis system, some introductory concepts and terminology are explained. In general, the term "network" will be used to describe any computer or telephone interconnection that carries voice (audio), video, or data. Networks include but are not limited to a public switched telephone network (PSTN), a public exchange (PBX) telephone network, the Internet including the world wide web (www), and a local area network (LAN), for example a LAN having an Ethernet structure.

As described above, a "communication," as used herein, is an exchange of media or other information, either discrete or continuous. Communication "content" may include audio (e.g. voice), video, text, or other data in any combination (e.g. audio only, audio & video, etc.).

It will be understood that a communication, as used herein, may include both a signaling portion and a real time portion. The real time portion is typically referred to as media. The signaling portion essentially provides connection handshaking that establishes a "session" between two or more endpoints. For example, the signaling portion can correspond to dialing a phone call at one endpoint, and subsequently answering the phone call at another endpoint. Upon establishing the session with the signaling portion, the two or more endpoints can communicate with each other in real time, for example with real time audio, video, or data. It will be further understood that the signaling portion and the real time portion (media) of the communication can be provided each having the same protocol or each having a different protocol, and can be provided each upon the same physical network structure between the two or more endpoints, or each upon a different physical network structure also between the two endpoint.

A "protocol monitor," or "network monitor," as used herein, refers to an electronic device that allows a user to view a display or report having a view of a protocol associated with a communication. The view may include a view of the particular messages sent during the signaling and/or during the real time portion of a communication transport.

Like a protocol monitor, the term "protocol analyzer", or "network analyzer," as used herein refers to an electronic device that allows a user to view a display or report having a view of a protocol associated with a communication. However, unlike a protocol monitor, a protocol analyzer allows the user to view the communication in various layers associated with the protocol.

It will be recognized that a protocol is associated with higher and/or lower layers of the protocol, wherein the layers are referred to herein as a protocol layer stack. At the highest layer, a particular communication can appear to the user in a protocol corresponding to application software, for example web browser software. At the lowest layer, the particular communication can appear in a protocol corresponding to a particular digital bit stream that is transported on a physical network. At intermediate layers, the particular communication can appear in intermediate protocols having particular address and data formats that are neither application software nor the particular bit stream that is transported on the physical network. Thus, a particular protocol can have a variety of corresponding layers in a protocol layer stack.

It will also be recognized that a communication can be transported with a first protocol that corresponds to but one layer of a first protocol layer stack. Alternatively, the communication can be transported with a second protocol that corresponds to but one layer of a second protocol layer stack. The protocol analyzer as described above allows the user to view more than one layer of a protocol layer stack.

Thus, not only can a communication having a particular protocol be associated with a variety of protocol layers, but the communication can be provided in a variety of different protocols, each having a variety of corresponding protocol layers.

The term "peer-to-peer" protocols as used herein will refer to two or more protocols associated with a communication that are each at the same layer of their respective protocol layer stacks (i.e., the same layer of abstraction). For example, at the lowest layer, both session interface protocol (SIP) and hyper text transport protocol (HTTP) can be physically transported in Ethernet protocol. At one layer above Ethernet, both SIP and HTTP can be provided in Internet protocol (IP). At one layer above IP, both SIP and HTTP can be provided in transmission control protocol (TCP). At one layer above TCP, SIP and HTTP are provided in SIP and HTTP protocols respectively. At the highest layer, SIP and HTTP can correspond to web browser application software. There are a variety of layers corresponding to both SIP and HTTP, of which only some are listed above. Moreover, both SIP and HTTP have peer-to-peer layers at the physical Ethernet layers, at the IP layers, at the TCP layers, at the SIP and HTTP layers respectively, and at the browser layers.

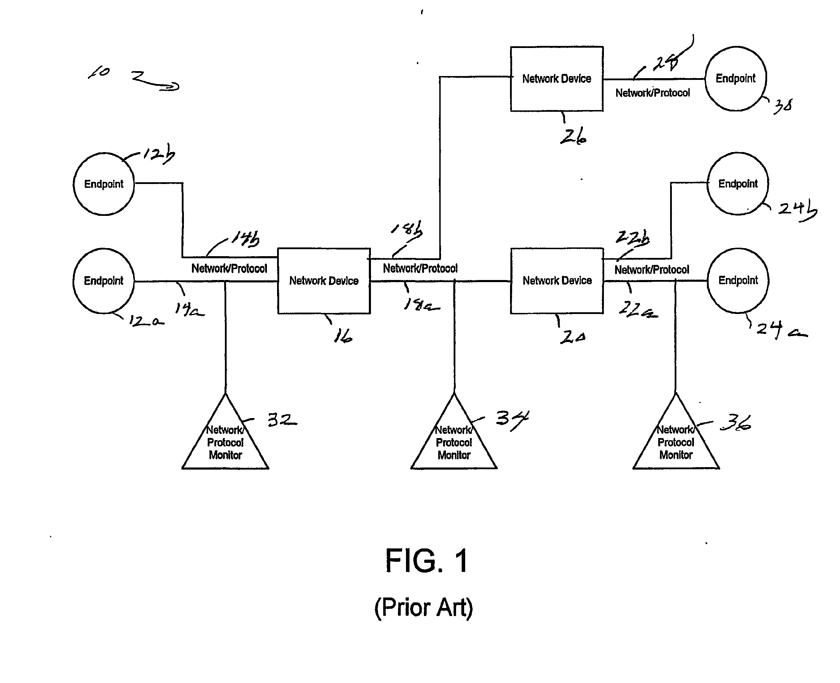

Referring now to FIG. 1, a prior art network and monitoring system includes a communication originating at a first endpoint 12a having a first protocol 14a. It will be understood herein that a protocol, for example the protocol 14a, is associated with a network having the first protocol. Thus, the protocol 14a is also denoted as a network/protocol 14a. As the communication originating at the first endpoint 12a propagates, it passes through a first network device 16. The first network device 16 can be one of a variety of network devices including, but not limited to, a gateway, a router, and a switch. If the first network device 16 is a gateway, the communication is provided at the output of the network device 16 having a second protocol 18a. The communication propagates further to a network second device 20. The second network device 20 can also be one of the variety of network devices including, but not limited to, a gateway, a router, and a switch. If the second network device 20 is a gateway, the communication is provided at the output of the second network device 20 having a third protocol 22a. The communication having the third protocol 22a is received at a second endpoint 24a.

In addition to the first and second endpoints 12a and 24a, a third endpoint 12b and a fourth endpoint 24b can be provided. Similar to the communication described above, the third endpoint 12b can communicate with the fourth endpoint 24b, the third endpoint 12b can communicate with the second endpoint 24a, and the first endpoint 12a can communicate with fourth endpoint 24b. It will be recognized that a first protocol 14b can be the same as the first protocol 14a, a second protocol 18b can be the same as the second protocol 18a, and a third protocol 22b can be the same as the third protocol 22a.

In addition to the connections described above, the first network device 16 can provide the communication having the second protocol 18b to a third network device 26. As described above, the second network device 20 can be one of the variety of network devices including, but not limited to, a gateway, a router, and a switch. If the third network device 26 is a gateway, the communication is provided at the output of the network device 26 having a fourth protocol 28. The communication having the fourth protocol 28 is received at a fifth endpoint 30.

It should be recognized that a particular communication intended for transport from the first endpoint 12a to the second endpoint 24a can be commingled with other communication intended for transport between these or other endpoints such as the third endpoint 12b and the fourth endpoint 24b. For example a first communication transported between the first endpoint 12a and the second endpoint 24a passes through the second protocol 18a. Similarly, a second communication transported between the third endpoint 12b and the fourth endpoint 24b passes through the second protocol 18a With this arrangement, both the first and the second communication can be simultaneously transported upon protocol 18a.

While a particular interconnectivity between five endpoints 12a, 12b, 24a, 24b, 30 is shown, it will be recognized that any number of endpoints, any number of network devices, and any number of protocols can be provided with conventional network topologies.

The communication having the first protocol 14a is coupled to a first network/protocol monitor 32, which provides a variety of first protocol information. The communication having the second protocol 18a is coupled to a second network/protocol monitor 34, which provides a variety of second protocol information. The communication having the third protocol 22a is coupled to a third network/protocol monitor 36, which provides a variety of third protocol information.

Network/protocol monitors 32, 34, 36 provide respective protocol information to a user of the monitors, wherein the protocol information is local to the network/protocol monitors 32, 34, 36.

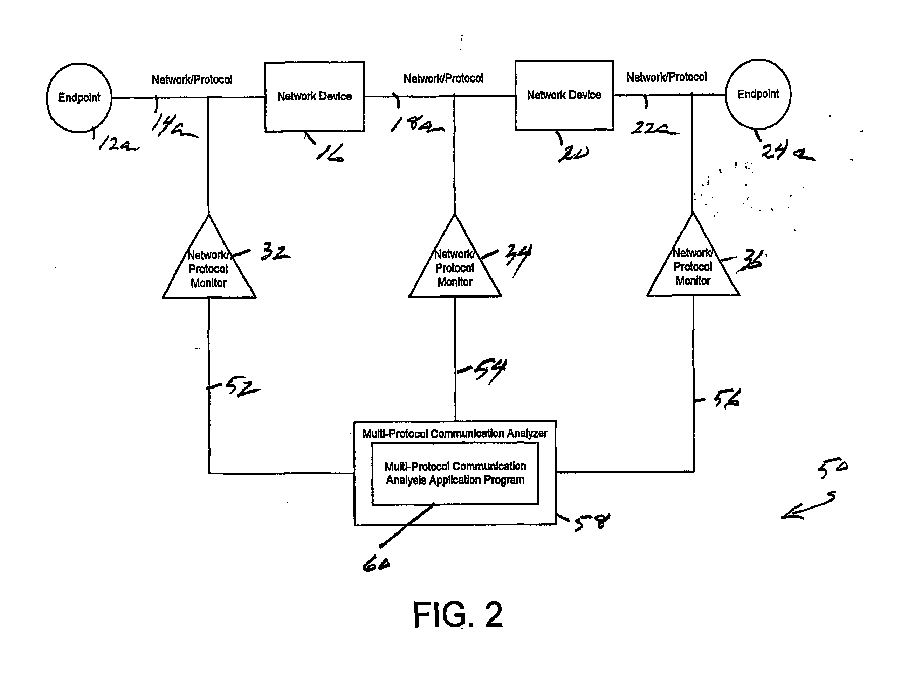

Referring now to FIG. 2, in which like elements of FIG. 1 are provided having like reference designations, a multi-protocol communication analysis system 50 includes the three network/protocol monitors 32, 34, 36 that provide the first, second, and third protocol information 52, 54, 56 to a multi-protocol communication analyzer 58 that includes a multi-protocol communication analysis application program 60.

As described above, it should be recognized that a particular communication intended for transport from the first endpoint 12a to the second endpoint 24a can be commingled with other communication intended for transport between these or other endpoints.

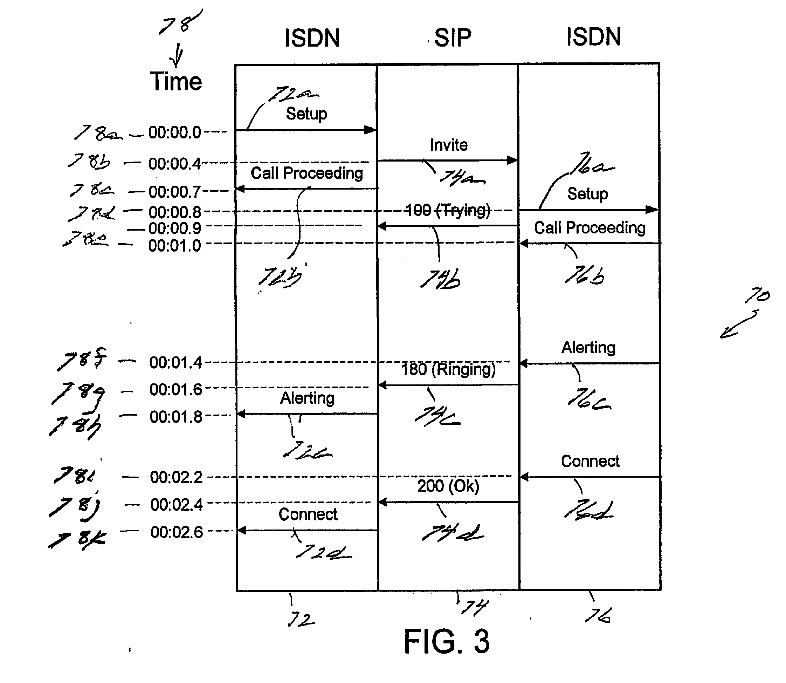

The multi-protocol communication analysis application program 60 provides a variety of functions, including but not limited to, identification of the persons or organizations corresponding to the first and second endpoints 12a, 24a, identification of a location of the communication as it propagates through the network (for example the first network device 16), identification of a time corresponding the reception of the communication by the multi-protocol communication analyzer 58, identification of a time corresponding to initiation of the communication (for example, initiation of the first communication having the first protocol 14a), identification of a state of the communication, (for example, the amount of progress though a signaling portion), identification of a content of the communication, (for example, G.711 audio media), identification of a message associated with the communication (for example a particular protocol message such as "acknowledge"), correlation of one or more of the aforementioned messages associated with respective one or more protocol conversions, identification of a direction of flow of the communication, identification of a number of same messages, and a display of one or more of the aforementioned identifications and/or correlations in a graphical user interface (GUI) display, for example a ladder diagram. An exemplary GUI is described below in association with FIG. 3.

Couplings from the network/protocol monitors 32, 34, 36 to the multi-protocol communication analyzer 58, and having the protocol information 52, 54, 56, can be provided in a variety of ways; including, but not limited to an Internet connection having a TCP/IP protocol. With this particular arrangement, it should be appreciated that the network/protocol monitors 32, 34, 36 can be remote from the multi-protocol communication analyzer 58.

The network devices 16, 20 and the protocols 14a, 18a, 22a are aspects of a conventional communication network. While two network devices 16, 20, three protocols 14a, 18a, 22a, and two endpoints 12a, 24a are shown, it should be appreciated that any number of network devices, any number of protocols, and any number of endpoints can be associated with this invention. It should be further appreciated that while three network/protocol monitors 32, 34, 36 are shown, any number of network/protocol monitors can be associated with this invention. Furthermore, while three network/protocol monitors 32, 34, 36 are shown to be associated with three respective protocols 14a, 18a, 22a, it should be appreciated that each protocol 14a, 18a, 22a need not be monitored by a corresponding network/protocol monitor 32, 34, 36.

While network/protocol monitors 32, 34, 36 are shown, it should be appreciated that network/protocol analyzers can be used in place of the network/protocol monitors with this invention. As described above, a network/protocol analyzer can provide the user with a view of the communication at a variety of protocol layers associated with the protocol.

The protocols 14a, 18a, 22a can correspond to a variety of protocols. The session initiation protocol (SIP), and the integrated services digital network (ISDN) protocol are but two examples (these known to one or ordinary skill in the art) of a variety of communication protocols that can be monitored and/or analyzed with this invention. This invention applies to all communication protocols, including custom communication protocols.

While the multi-protocol communication analyzer 58 is shown as a device separate from the network protocol monitors 32, 34, 36, it should be recognized that, in another embodiment, the multi-protocol communication analyzer 58 can be integral to any one or more of the network protocol monitors 32, 34, 36.

Referring now to FIG. 3, an exemplary ladder diagram 70 that can be presented to a user of the protocol medium analyzer 58 (FIG. 2) includes three ladder portions 72, 74, 76. The ladder diagram 70 can be presented to the user as a printed report or as a video display, or by any other presentation. The ladder diagram can also be stored for subsequent display and analysis. It will be appreciated that a communication can include individual "messages." Some exemplary messages 72a-72d, 74a-74d, 76a-76d are further described below.

In the particular exemplary ladder diagram 70, the first ladder portion 72 shows a view of ISDN communication protocol messages 72a-72d, for example between the first endpoint 12a and the first network device 16 (i.e., protocol 14a) shown in FIG. 2. The second ladder portion 74 shows a view of SIP communication protocol messages 74a-74d, for example between the first network device 16 and the second network device 20 (i.e., protocol 18a) shown in FIG. 2. The third ladder portion 76 shows a view of ISDN communication protocol messages 76a-76d, for example between the second network device 18 and the second endpoint 24a (i.e., protocol 22a) shown in FIG. 2.

Though a time scale 78 is shown having a resolution of 0.1 seconds, it should be recognized that other time scales with other resolutions can be provided by this invention. One of ordinary skill in the art will recognized the messages 72a-72d, 74a-74d, 76a-76d to be conventional messages associated with the signaling portions of the ISDN, SIP and ISDN protocols respectively. The direction of the arrows indicates the direction in which the variety of signaling portion messages propagate.

It will be understood that the signaling portion messages 72a-72d, 74a-74d, 76a-76d correspond to one communication that is transported through a network, and that is converted from ISDN to SIP to ISDN protocols as it is transported. The particular messages 72a-72d, 74a-74d, 76a-76d provide the connection of a session between two endpoints.

An ISDN message 72a, "setup," is generated that initiates the session setup at a first time 78a. The "setup" message 72a is converted to a SIP message 74a, "invite," at a time 78b. The "invite" message 74a is further converted to an ISDN message 76a, "setup," at a time 78d. Thus, the particular message passes from ISDN protocol to SIP protocol and back to ISDN protocol. At a time 78c, second ISDN message 72b, "call proceeding," is generated. The messages 72b, 74b and 76b are ISDN, SIP, and ISDN messages respectively that indicate acknowledgement of the respective messages 72a, 74a, and 76a.

It should be noted that only the acknowledgement message 76b, "call proceeding," indicates that the message 72a, "setup," was propagated all the way to the second endpoint, for example to the second endpoint 24a. The other acknowledgement messages 72b, 74b only indicate intermediate transport to network devices. It should be further recognized that the acknowledgement message 76b does not propagate back to the first endpoint, for example to the first endpoint 12a. The other acknowledgement messages 72b, 74b do not directly correspond to the acknowledgement message 76b. Thus, the first endpoint receives no direct acknowledgement that the message 72a, "setup," propagates to the second endpoint, for example to the second endpoint 24a.

An ISDN message 76c, "alerting," is generated at time 78f. The "alerting" message 76c is converted to a SIP message 74c, "180," at a time 78g. The "180" message 74c is further converted to an ISDN message 72c, "alerting," at a time 78h. Similarly, an ISDN message 76d, "connect," is generated at time 78i. The "connect" message 76d is converted to a SIP message 74d, "200," at a time 78j. The "200" message 74d is further converted to an ISDN message 72d, "connect," at a time 78k. At this point, a session connection is established between a first and a second endpoint, and the communication can progress to the real time portion described above.

The multi-protocol communication analysis application program 60 (FIG. 2) provides a user with a printout or display such as the exemplary ladder diagram 70. The multi-protocol communication analysis application program 60 (FIG. 2) can correlate, analyze, format, display and log (store) the protocol information 52, 54, 56 (FIG. 2) provided by the variety of network/protocol monitors 32, 34, 36 (FIG. 2). The ladder diagram is but one of a variety of displays that can be provided to the user that allows the user to quickly visualize and quantify, on a time scale, the variety of messages corresponding to protocol conversions that can occur when a communication is transported through a network.

It should be recognized that the ISDN messages 72a-72d, the SIP messages 74a-74d, and the ISDN messages 76a-76d are peer-to-peer layers at the same layer of the respective protocol layer stacks. Peer-to-peer layer messages provide the most understandable view of the communication transport to a user. It should be recognized that peer-to-peer messages could also be provided at a different layer of the protocol layer stack, for example at the IP layer. However, this layer would be more difficult to view and interpret. It is also possible with this invention to view non peer-to-peer layers. For example, the SIP messages 74 can be provided at the IP layer, while the ISDN messages 72, 76 can be provided at the ISDN layer. A view of non peer-to-peer layers is also difficult to view and interpret. Generally, viewing of peer-to-peer information at a relatively high layer,(e.g. ISDN and SIP) is most easily viewed and interpreted.

It should also be recognized that while a signaling portion of the transport of a communication is shown, the invention applies equally well the to the real time portion (RTP). Generally the real time portion is comprised of data packet messages, also referred to as messages herein, at a high packet rate. Thus, when viewing the RTP, it may be desirable to view groups of RTP messages rather than individual RTP messages.

It should also be recognized that while SIP and ISDN protocols are shown, other protocols can be analyzed with this inventions including, but not limited to, SS7, GSM, GPRS, IP, TCP, UDP, SCTP, FTP, HTTP, LDAP, RTP, RSVP, RTSP, MGCP, H.323, H.248, H.320, H.450, and WAP. These are but some of the numerous protocol standards to which this invention can be applied. It will be recognized that a variety of organizations publish the numerous protocol standards. For example, the International Telecommunication Union (ITU), the American National Standards Institute (ANSI), the European Telecommunications Standardizations Institute (ETSI), and the Internet Engineering Task Force (IETF) are but some of the agencies that publish the numerous protocol standards that can be monitored by this invention.

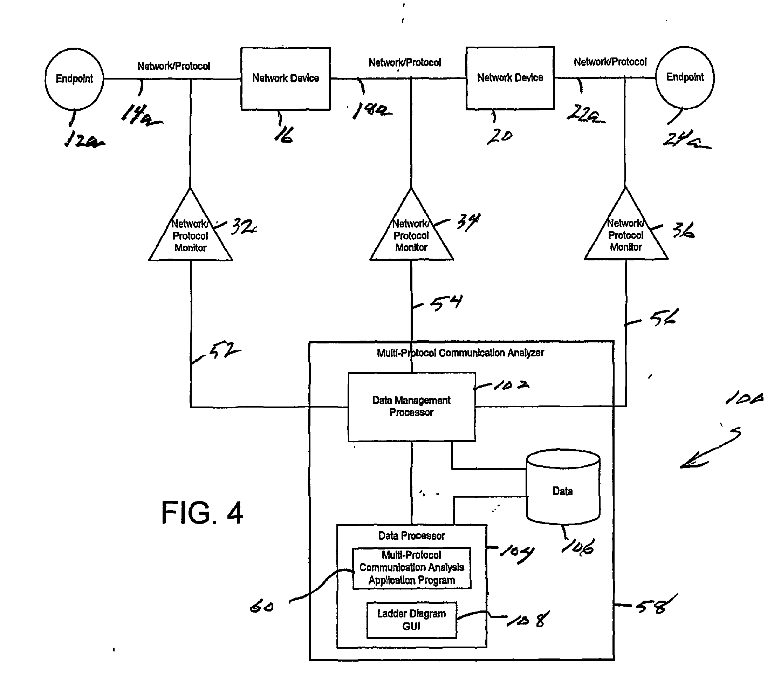

Referring now to FIG. 4, in which like elements of FIGS. 1 and 2 are provided having like reference designations, an exemplary multi-protocol communication analysis system 100 includes the three network/protocol monitors 32, 34, 36 that provide the first, second, and third protocol information 52, 54, 56 to a multi-protocol communication analyzer 58. The multi-protocol communication analyzer 58 can include a data management processor 102. The data management processor 102 can be coupled to a data processor 104 and coupled to a data storage area 106. The data processor 104 can also be coupled to the data storage area 106.

With this particular arrangement, the first, second, and third protocol information 52, 54, 56 are provided to the data management processor 102. The first, second, and third protocol information 52, 54, 56 are stored in the data storage area 106 and are also provided to the data processor 104. The data processor 104 includes the multi-protocol communication analysis application program 60 described above in association with FIG. 2. The multi-protocol communication analysis application program 60 can provide a graphical user interface (GUI) 108 that may be a ladder diagram of a type described in FIG. 3. In an alternate embodiment, the multi-protocol communication analysis application program 60 can provide any other sort of GUI that presents information that describes protocol messages corresponding to protocol conversions. In yet another alternate embodiment, the multi-protocol communication analysis application program 60 can provide a paper report.

While a particular architecture associated with the multi-protocol communication analyzer 58 is shown, it should be recognized that other architectures are possible with this invention. In another embodiment, for example, the multi-protocol communication analyzer 58 can be provided without the data management processor 102 and/or without the data storage area 106. With this arrangement, the data processor 104 can receive the first, second, and third protocol information 52, 54, 56 directly. In yet another embodiment, the data management processor 102 and the storage area 106 can be provided internally to the data processor 104.

Alternatively, the multi-protocol communication analyzer 58 can be performed by functionally equivalent circuits such as a digital signal processor circuit or an application specific integrated circuit (ASIC). FIG. 4 illustrates but one functional architecture required to fabricate circuits or to generate computer software to perform the processing required in accordance with the present invention.

Having described preferred embodiments of the invention it will now become apparent to those of ordinary skill in the art that other embodiments incorporating these concepts may be used. Additionally, the software included as part of the invention may be embodied in a computer program product that includes a computer program medium. For example, such a computer usable medium can include a readable memory device, such as a hard drive device, a CD-ROM, a DVD-ROM, or a computer diskette, having computer readable program code segments stored thereon. The computer readable medium can also include a communications link, either optical, wired, or wireless, having program code segments carried thereon as digital or analog signals.

## Claims

1. A method of tracing and analyzing the transport of a communication in a network having a plurality of protocols (14a, 18a, 22a), the method comprising:
collecting protocol information corresponding to the plurality of protocols, wherein the collecting is provided by a plurality of network/protocol monitors (32,34,36);
processing the protocol information from the plurality of protocols to provide processed protocol information including
a) identifying a time corresponding to the reception of the protocol information by an analyser,
b) identifying a time corresponding to the initiation of the communication, and
c) correlating the plurality of protocol messages associated with a respective one or more protocol conversions;
**characterised by**
displaying as a ladder diagram (70) including a time scale (78) a correlation of the one or more protocol messages associated with a respective one or more protocol conversions wherein the displaying includes displaying a message in a first protocol and a corresponding message in a second protocol.

2. A method as claimed in claim 1, wherein said displaying the processed protocol information includes displaying at least one of:
identification of a person or an organization corresponding to an endpoint;
a location of the communication in the network;
a state of the communication;
said time of reception of the protocol information;
one or more protocol messages associated with the one or more protocols;
said time of initiation of the communication;
a content of the one or more protocol messages;
a direction of flow of the communication; and
a number of same kind of messages.

3. A method as claimed in claim 1 or 2, wherein the processing includes analyzing the protocol information, formatting the protocol information, and storing the protocol information.

4. A method as claimed in any of claims 1-3, wherein the collecting protocol information includes collecting the protocol information corresponding to at least one of ITU protocols, ANSI protocols, IETF protocols, and ETSI protocols.

5. A method as claimed in any of claims 1-4, wherein the collecting protocol information includes collecting the protocol information corresponding to at least one of ISDN, SIP, SS7, GSM, GPRS, IP, TCP, UDP, SCTP, FTP, HTTP, LDAP, RTP, RSVP, RTSP, MGCP, H.323, H.248, H.320, H.450, and WAP protocols.

6. An apparatus (58) for tracing and analyzing the transport of a communication in a network having a plurality of protocols (14a,18a,22a), the apparatus comprising:
a data management processor (60) for collecting protocol information corresponding to the plurality of protocols, wherein the collecting is provided by a plurality of network/protocol monitors (32,34,36);
a data processor for processing the protocol information from the plurality of protocols to provide processed protocol information including
a) identifying a time corresponding to the reception of the protocol information by an analyser,
b) identifying a time corresponding to the initiation of the communication, and
c) correlating the plurality of protocol messages associated with a respective one or more protocol conversions;
**characterised by**
a display for displaying as a ladder diagram (70) including a time scale (78) a correlation of the one or more protocol messages associated with a respective one or more protocol conversions wherein the displaying includes displaying a message in a first protocol and a corresponding message in a second protocol.

## Patentansprüche

1. Verfahren zum Verfolgen und Analysieren des Transports einer Kommunikation in einem Netzwerk mit mehreren Protokollen (14a, 18a, 22a), wobei das Verfahren die folgenden Schritte umfasst:
Sammeln von den mehreren Protokollen entsprechenden Protokollinformationen, wobei das Sammeln durch mehrere Netzwerk/Protokoll-Monitore (32, 34, 36) erfolgt;
Verarbeiten der Protokollinformationen von den mehreren Protokollen zum Erzeugen von verarbeiteten Protokollinformationen, einschließlich:
a) Identifizieren eines Zeitpunkts, der dem Empfang der Protokollinformationen durch einen Analysator entspricht;
b) Identifizieren eines Zeitpunkts, der dem Starten der Kommunikation entspricht, und
c) Korrelieren der mehreren Protokollmeldungen, die mit jeweiligen ein oder mehreren Protokollkonversionen assoziiert sind;
**gekennzeichnet durch**:
Anzeigen einer Korrelation der mit jeweiligen ein oder mehreren Protokollkonversionen assoziierten ein oder mehreren Protokollmeldungen als ein Leiterdiagramm (70) mit einer Zeitskala (78), wobei das Anzeigen die Anzeige einer Meldung in einem ersten Protokoll und einer entsprechenden Meldung in einem zweiten Protokoll beinhaltet.

2. Verfahren nach Anspruch 1, wobei das genannte Anzeigen der verarbeiteten Protokollinformationen das Anzeigen von wenigstens einem der Folgenden beinhaltet:
die Identifikation einer Person oder einer Organisation entsprechend einem Endpunkt;
eines Ortes der Kommunikation in dem Netzwerk;
eines Zustands der Kommunikation;
der genannten Empfangszeit der Protokollinformationen;
ein oder mehrere Protokolle, das/die assoziiert ist/sind mit den ein oder mehreren Protokollmeldungen;
der genannten Anfangszeit der Kommunikation;
dem Inhalt der ein oder mehreren Protokollmeldungen;
einer Laufrichtung der Kommunikation; und
einer Anzahl derselben Art von Meldungen.

3. Verfahren nach Anspruch 1 oder 2, wobei die Verarbeitung das Analysieren der Protokollinformationen, das Formatieren der Protokollinformationen und das Speichern der Protokollinformationen beinhaltet.

4. Verfahren nach einem der Ansprüche 1-3, wobei das Sammeln von Protokollinformationen das Sammeln der Protokollinformationen beinhaltet, die wenigstens einem der folgenden Protokolle entsprechen: den ITU-Protokollen, den ANSI-Protokollen, den IETF-Protokollen und/oder den ETSI-Protokollen.

5. Verfahren nach einem der Ansprüche 1-4, wobei das Sammeln von Protokollinformationen das Sammeln der Protokollinformationen beinhaltet, die wenigstens einem der folgenden Protokolle entsprechen: ISDN, SIP, SS7, GSM, GPRS, IP, TCP, UDP, SCTP, FTP, HTTP, LDAP, RTP, RSVP, RTSP, MGCP, H.323, H.248, H.320, H.450 und WAP.

6. Vorrichtung zum Verfolgen und Analysieren des Transports einer Kommunikation in einem Netzwerk mit mehreren Protokollen (14a, 18a, 22a), wobei die Vorrichtung Folgendes umfasst:
einen Datenmanagement-Prozessor (60) zum Sammeln von Protokollinformationen, die den mehreren Protokollen entsprechen, wobei das Sammeln durch mehrere Netzwerk/Protokoll-Monitore (32, 34, 36) erfolgt;
einen Datenprozessor zum Verarbeiten der Protokollinformationen von den mehreren Protokollen, um verarbeitete Protokollinformationen bereitzustellen, einschließlich:
a) Identifizieren eines Zeitpunkts, der dem Empfang der Protokollinformationen durch einen Analysator entspricht;
b) Identifizieren eines Zeitpunkts, der dem Einleiten der Kommunikation entspricht, und
c) Korrelieren der mehreren Protokollmeldungen, die mit jeweiligen ein oder mehreren Protokollkonversionen assoziiert sind;
**gekennzeichnet durch**:
ein Display zum Anzeigen einer Korrelation der mit jeweiligen ein oder mehreren Protokollkonversionen assoziierten ein oder mehreren Protokollmeldungen als ein Leiterdiagramm (70) mit einer Zeitskala (78), wobei das Anzeigen die Anzeige einer Meldung in einem ersten Protokoll und einer entsprechenden Meldung in einem zweiten Protokoll beinhaltet.

## Revendications

1. Un procédé de suivi et d'analyse du transport d'une communication dans un réseau possédant une pluralité de protocoles (14a, 18a, 22a), le procédé comprenant :
le recueil d'informations de protocole correspondant à la pluralité de protocoles, où le recueil est assuré par une pluralité de moniteurs de réseau/protocole (32, 34, 36),
le traitement des informations de protocole provenant de la pluralité de protocoles afin de fournir des informations de protocole traitées comprenant
a) l'identification d'une heure correspondant à la réception des informations de protocole par un analyseur,
b) l'identification d'une heure correspondant au début de la communication, et
c) la corrélation de la pluralité des messages de protocole associés à une ou plusieurs conversions de protocole respectives,
**caractérisé par**
l'affichage sous la forme d'un diagramme en escalier (70) comprenant une échelle de temps (78) d'une corrélation du un ou plusieurs messages de protocole associés à une ou plusieurs conversions de protocole respectives où l'affichage comprend l'affichage d'un message dans un premier protocole et d'un message correspondant dans un deuxième protocole.

2. Un procédé selon la Revendication 1, où ledit affichage des informations de protocole traitées comprend l'affichage d'au moins un des éléments suivants :
l'identification d'une personne ou d'une organisation correspondant à un point d'extrémité,
un emplacement de la communication sur le réseau,
un état de la communication,
ladite heure de réception des informations de protocole,
un ou plusieurs messages de protocole associés aux un ou plusieurs protocoles,
ladite heure de début de la communication,
un contenu du un ou plusieurs messages de protocole,
une direction du flux de la communication, et
un nombre de messages du même type.

3. Un procédé selon la Revendication 1 ou 2, où le traitement comprend l'analyse des informations de protocole, la mise en forme des informations de protocole et la conservation en mémoire des informations de protocole.

4. Un procédé selon l'une quelconque des Revendications 1 à 3, où le recueil d'informations de protocole comprend le recueil des informations de protocole correspondant à au moins un des protocoles UIT, des protocoles ANSI, des protocoles IETF et des protocoles ETSI.

5. Un procédé selon l'une quelconque des Revendications 1 à 4, où le recueil d'informations de protocole comprend le recueil des informations de protocole correspondant à au moins un des protocoles suivants : RNIS, SIP, SS7, GSM, GPRS, IP, TCP, UDP, SCTP, FTP, HTTP, LDAP, RTP, RSVP, RTSP, MGCP, H.323, H.248, H.320, H.450 et WAP.

6. Un appareil (58) destiné au suivi et à l'analyse du transport d'une communication dans un réseau possédant une pluralité de protocoles (14a, 18a, 22a), l'appareil comprenant :
un processeur de gestion de données (60) destiné au recueil d'informations de protocole correspondant à la pluralité de protocoles, où le recueil est assuré par une pluralité de moniteurs de réseau/protocole (32, 34, 36),
un processeur de données destiné au traitement des informations de protocole provenant de la pluralité de protocoles afin de fournir des informations de protocole traitées comprenant
a) l'identification d'une heure correspondant à la réception des informations de protocole par un analyseur,
b) l'identification d'une heure correspondant au début de la communication, et
c) la corrélation de la pluralité des messages de protocole associés à une ou plusieurs conversions de protocole respectives,
**caractérisé par**
un écran destiné à l'affichage sous la forme d'un diagramme en escalier (70) comprenant une échelle de temps (78) d'une corrélation du un ou plusieurs messages de protocole associés à une ou plusieurs conversions de protocole respectives où l'affichage comprend l'affichage d'un message dans un premier protocole et d'un message correspondant dans un deuxième protocole.
